# EUROPEAN PATENT SPECIFICATION

(11) **EP 2 322 989 B1**
(45) Date of publication and mention of the grant of the patent: **14.11.2012**
(21) Application number: 09811693.2
(22) Date of filing: 02.09.2009
(51) Int. Cl.: G03B 17/56, F16M 11/14

(54) **BALL HEAD FOR A CAMERA TRIPOD, HAVING FRONT AND REAR ANGLES CAPABLE OF BEING FINELY ADJUSTED THROUGH MECHANICAL MANIPULATION**
KUGELKOPF FÜR EIN KAMERA-DREIBEIN MIT DURCH MECHANISCHE MANIPULATION FEINEINSTELLBAREN VORDEREN UND HINTEREN WINKELN
ROTULE POUR TREPIED D'APPAREIL PHOTO, DONT LES ANGLES AVANT ET ARRIERE PEUVENT ÊTRE SOUMIS A UN REGLAGE FIN PAR MANIPULATION MECANIQUE

(30) Priority: 05.09.2008 KR 20080087639
(43) Date of publication of application: 18.05.2011
(73) Proprietor: Kang, Pil-Sik, Gyeonggi-do 420-804 (KR)
(72) Inventor: Kang, Pil-Sik, Gyeonggi-do 420-804 (KR)
(74) Representative: Hering, Hartmut
(86) International application number: PCT/KR2009/004950
(87) International publication number: WO 2010/027194

(56) References cited:
- DE-C1- 19 839 461
- JP-A- 5 127 253
- KR-A- 20060 035 830
- KR-A- 20070 054 127
- US-A- 4 423 850
- US-B1- 6 820 531

## Description

### [Technical Field]

The present invention relates to a ball head for a camera tripod to fix a camera or various photographing appliances. In particular, the present invention relates to a ball head for a camera tripod, in which an angle of the ball head can be repeatedly adjusted after an angle of the ball head has been primarily set so that the angle of the ball head can be finely adjusted by moving the ball head in front, rear, left, and right directions through mechanical manipulation.

### [Background Art]

A conventional ball head available in the market is mounted on a tripod by using a ball having excellent mobility, so a telephoto lens or various photographing appliances having heavy weight can be adjusted with various desired angles on the tripod.

Accordingly, for the purpose of manipulation, the ball head is released from pressure such that the ball head can be freely adjusted in all directions by the hand of a user, and then a knob used to fasten or release the ball head is fastened such that a ball can be fastened by a lower plate supporting the ball, thereby fixing the ball head at a specific angle.

However, such a conventional ball head has disadvantages in that a user has to release the pressure applied to the ball by unfastening a knob and then finely adjust a photographing angle to a desired degree by using the hand when the fine adjustment of the photographing angle is required in a state that the heavy telescope lens or photographing appliances are mounted on the tripod after the photographing angle has been primarily adjusted by the hand of the user. In this case, the accurate adjustment to a desired photographing angle is significantly difficult due to the heavy weight of the telephoto lens or the photographing appliances. In particular, it is actually difficult for the user to fasten the ball by fastening the knob using one hand while supporting the telephoto lens or the photographing appliances using the other hand.

US 4 423 850 A discloses a ball head combined with a mechanics for fine adjustment. However, the fine adjustment does not change the angle of the ball.

The closest prior art document US 6 820 531 B1 discloses a ball head as described in the preamble of claim 1.

### [Disclosure]

### [Technical Problem]

According to the present invention, the photographing angle can be finely adjusted through repeated mechanical manipulations even if the ball head is fixed.

### [Technical Solution]

To this end, a ball guide is provided at a lower end of a ball and fixed through fastening, and a shaft integrated with the ball guide directly under the ball guide is fastened or released to adjust the ball guide in the front or rear direction.

In addition, a slider is used to achieve the leftward and rightward movements simultaneously with forward and rearward movements. Accordingly, angle adjustment can be variously achieved.

### [Advantageous Effects]

As described above, after a photographing angle has been primarily adjusted, the fine adjustment of the photographing angle can be simply achieved through repeated mechanical manipulations. If the slider is used, the adjustment can be achieved in left and right directions as well as the front and rear directions.

### [Description of Drawings]

FIG. 1 is a sectional view showing the overall structure of an assembly according to the present invention;

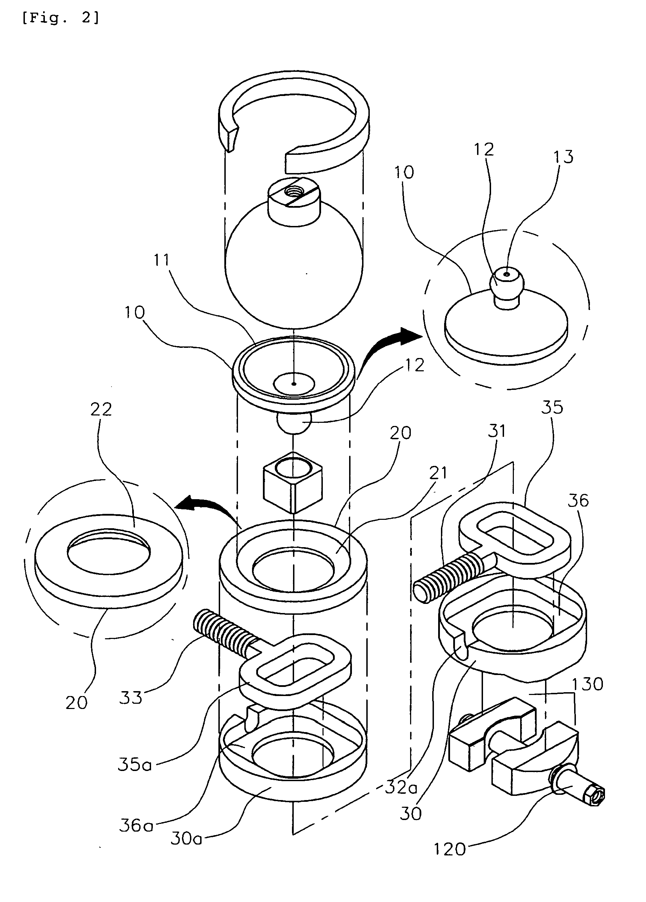

FIG. 2 is an exploded perspective view showing main components according to the present invention;

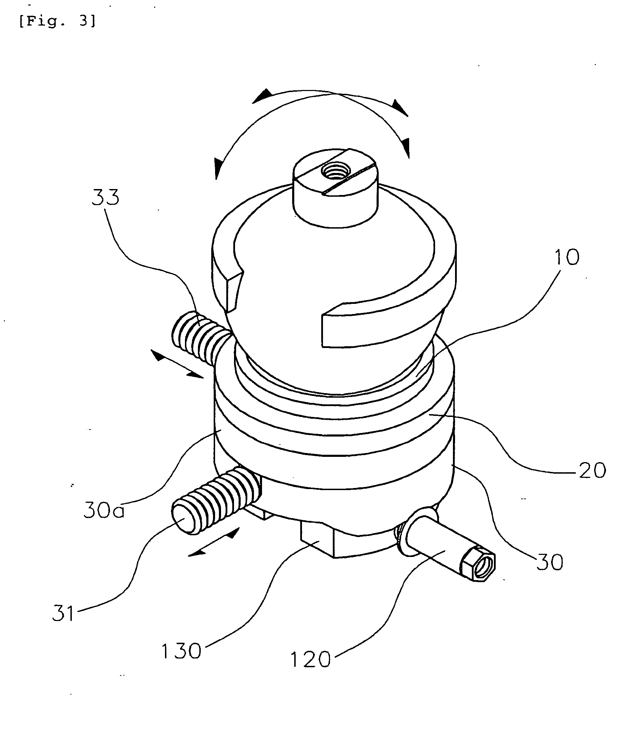

FIG. 3 is a view showing the operation of the main components when the main components have been assembled;

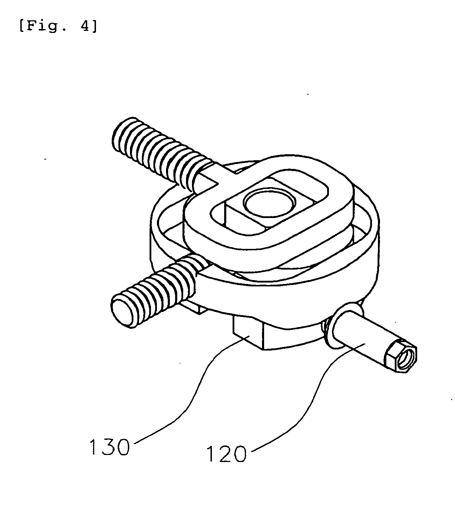

FIG. 4 is a view showing a slider received in a middle frame; and

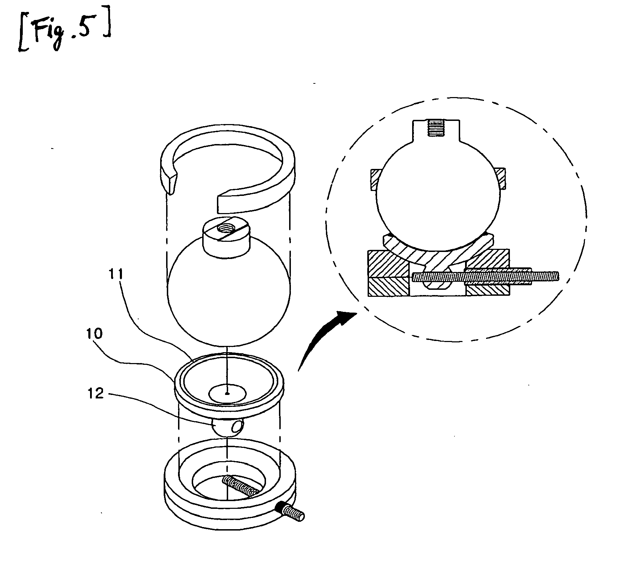

FIG. 5 is an assembly view showing one embodiment of the present invention.

### [Best Mode]

According to the present invention, a ball 110 is received in a case 100 and the ball 110 is fastened by a fastening member 130, which is moved to the left or right to press the ball 110 through the rotation of a knob 120 used to move or fix the ball. A ball guide is provided at the lower end of the ball of the ball head to closely adhere to the ball, and a shaft is provided directly under the ball guide in such a manner that the shaft can be pushed or pulled by a guide rod. Thus, in a state in which the angle of the ball fixed in the ball guide is primarily adjusted, the angle of the ball can be secondarily adjusted, so that the fine angle adjustment can be achieved in the front and rear directions through mechanical manipulations.

### [Mode for Invention]

Hereinafter, the present invention will be described in detail with reference to accompanying drawings.

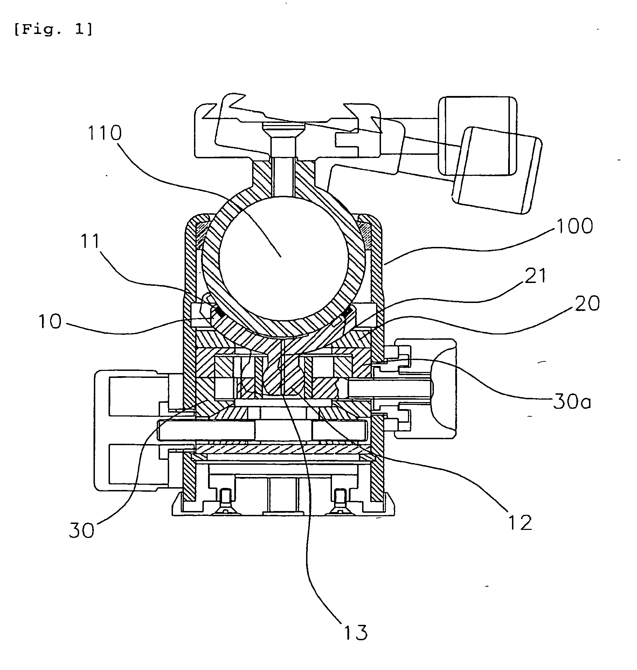

As shown in FIG. 1, according to the present invention, a ball guide 10 having a curved shape is provided under a ball 110 while closely adhering to the ball. In order to increase the fixing strength between the ball and the ball guide 10, a friction ring 11 protrudes from the rim of the ball guide 10 to the extent that the friction ring 11 may closely adhere to the ball. A shaft 12 protrudes directly downward from the central portion of the ball guide 10 and has a predetermined strength such that the shaft 12 is not bent when the shaft 12 is pushed or pulled in order to adjust the angle of the ball in front and rear directions. The ball guide 10 has a curved surface to closely adhere to the ball and is provided around the rim thereof with the friction ring 11, so that a vacuum occurs between the ball and the curved surface. In this case, the ball does not move when the movement of the ball is required, so an air drain hole 13 is formed in the ball guide 10 having the shaft 12. The air drain hole 13 may be formed in the ball guide 10 or may be formed through the shaft 12.

In addition, a guide ring 20 is provided under the ball guide 10 so that the ball can move in the front and rear directions as the shaft 12 is pushed or pulled in a state that the ball 110 is guided. A curved inclined surface 21 is formed in the guide ring 20 so that the guide ring 20 closely adheres to the ball guide 10. A bottom surface 22 of the guide ring 20 is flat and the guide rod 31 used to move the shaft 12 of the ball guide 10 back and forth is connected to the shaft 12 in such a manner that the guide rod 31 moves back and forth through the case 100.

In this case, in order to finely adjust the angle of the ball, a thread is formed on the guide rod 31 and a rotation member is fitted around the guide rod 31 and engaged with the thread so that the rotation member is rotatably fixed into the case. Accordingly, if the rotation member exposed out of the case is rotated, the guide rod 31 moves in the front and rear directions due to the pitch of the thread, so that the angle of the ball is finely adjusted in the front and rear directions.

In addition, when the guide rod 31 is provided thereon with a thread and the guide rod 31 is screwed with the shaft while passing through the shaft in a state that the guide rod 31 is rotatably fixed into the case, if the guide rod 31 exposed out of the case is rotated, the shaft moves in the front and rear directions due to the thread, thereby adjusting the angle of the ball in the front and rear directions.

In this case, if only the guide rod is used, the angle of the ball head is adjusted only in front and rear directions. Accordingly, in order to finely adjust the angle of the ball head in the left and right directions as well as the front and rear directions, two middle frames 30 having a receiving section are formed at the lower end of the guide ring 20, so that the guide rod 31 can enter into or leave from the middle frame 30 through a hole 32 or an opening groove 32a. The guide rod 31 is provided at a front end thereof with a slider having a space in which the shaft is received and the slider can move in the receiving part of the middle frame, so that the angle of the ball can be adjusted in the left and right directions as well as the front and rear directions.

To this end, a slider 35 for receiving the shaft 12 of the ball guide 10 is coupled with the guide rod 31, and the middle frame 30 is provided with a receiving part 36 for receiving the slider 35, so that the guide rod 31 can be exposed to the outside of the case through the middle frame 30. In this case, the guide rod 31 pushes or pulls the slider 35, so that the slider 35 can move in the receiving part 36 of the middle frame 30. Accordingly, the fine angle adjustment can be achieved in the front and rear directions. Further, in order to adjust the angle in the left and right directions as well as front and rear directions, sliders 35 are provided in X and Y axes, so that the ball can be adjusted in the left and right directions as well as the front and rear directions.

To this end, two middle frames 30 and 30a having receiving parts 36 and 36a are arranged in such a manner that the receiving parts 36 and 36a of receiving the sliders 35 and 35a therein closely adhere to each other while facing each other. Then, the guide rods 31 protrude in such a manner that the sliders 35 and 35a received in the receiving parts 36 and 36a are perpendicular to each other, so that the angle of the ball can be adjusted in the left and right directions as well as the front and left directions.

In this case, since the slider must closely adhere to the receiving part of the middle frame, if the diameter of the shaft does not match with the space of the slider, the slider must be prepared substantially identical to the shaft in shape or the slider must have a space to receive the shaft in a state that the slider closely adheres to the inner side of the receiving part of the middle frame. In this manner, the angle of the ball can be accurately adjusted in the left and rear directions as well as the front and rear directions.

Accordingly, a connection member is required to be fitted into the slider. Such a connection member may be separately provided or integrated with the slider.

In this case, in order to finely adjust the angle of the ball, a thread is formed on the guide rod 31, and a rotation member is fitted around the guide rod 31 and engaged with the thread so that the rotation member is rotatably fixed into the case. Accordingly, if the rotation member exposed out of the case is rotated, the guide rod moves in the front and rear directions due to the pitch of the thread, so that the angle of the ball is finely adjusted in the front and rear direction.

In addition, the guide rod has a thread, and is rotatably fixed into the case. In this state, when the guide rod is screwed with the slider in such a manner that the guide rod moves back and forth through the slider, if the guide rod exposed out of the case is rotated, the slider moves back and forth due to the thread, thereby adjusting the angle of the ball in the front and rear directions.

In other words, the angle of the ball can be finely adjusted due to the pitch of the thread.

### [Industrial Applicability]

The present invention relates to a tripod ball head of fixing a camera or various photographing appliances onto a tripod. In particular, when the fine angle adjustment of the ball head must be repeated in a state that the angle of the ball head has been primarily adjusted, the angle can be finely adjusted in front, rear, left and right directions through mechanical manipulation. Accordingly, the present invention can overcome a disadvantage in which the fine angle adjustment in the convention ball head is difficult.

## Claims

1. Ball head for a camera tripod capable of finely adjusting front and rear angles, comprising:
i) a ball (110); and
ii) a fastening member (130) for pressing the ball to move or fix the ball;
**characterized by** further comprising
iii) a ball guide (10) provided under the ball to closely adhere to the ball;
iv) a shaft (12) protruding directly downward from the ball guide; and
v) a guide rod (31);
vi) wherein, in a state in which an angle of the ball has been primarily adjusted, the angle of the ball fixed to the ball guide can be secondary adjusted by pushing or pulling the shaft by the guide rod even if the ball head is fixed.

2. The ball head of claim 1, wherein a friction ring (11) is provided at a part of the ball guide (10) that closely adheres to the ball (110).

3. The ball head of claim 1 or 2, wherein an air drain hole (13) is formed through the ball guide (10).

4. The ball head of claim 1, wherein a slider (35) is coupled with the guide rod (31) and received in a receiving part (36) of a middle frame (30), and the shaft (12) is received in the slider (35) so that the angle is adjusted in front and rear directions by pushing or pulling the guide rod (31) of the slider (35).

5. The ball head of claim 4, wherein two middle frames (30, 30a) are provided to receive the slider (35) and a second slider (35a) respectively so that angle adjustment is achieved in front, rear, left, and right directions.

6. The ball head of claim 1, further comprising a guide ring (20) provided directly under the ball guide (10) and having a curved surface (21) formed along a lateral side of the guide ring (20).

7. The ball head of claim 6, wherein a middle frame (30) is provided at a lower end of the guide ring (20), and the guide rod (31) enters into or leaves from the middle frame (30).

## Patentansprüche

1. Kugelkopf für ein Kamerastativ, der vordere und hintere Winkel fein einstellen kann und folgendes aufweist:
i) eine Kugel (110); und
ii) ein Befestigungselement (130) zum derartigen Drücken der Kugel, dass die Kugel bewegt oder fixiert wird;
**dadurch gekennzeichnet, dass** er weiterhin folgendes aufweist:
iii) eine Kugelführung (10), die derart unter der Kugel vorgesehen ist, dass sie nahe an der Kugel anhaftet;
iv) eine Welle (12), die von der Kugelführung aus direkt in Richtung nach unten vorsteht; und
v) eine Führungsstange (31);
vi) wobei in einem Zustand, in welchem ein Winkel der Kugel primär eingestellt worden ist, der Winkel der an der Kugelführung fixierten Kugel durch Drücken und Ziehen der Welle durch die Führungsstange selbst dann sekundär eingestellt werden kann, wenn der Kugelkopf fixiert ist.

2. Kugelkopf nach Anspruch 1, wobei ein Reibring (11) an einem Teil der Kugelführung (10) vorgesehen ist, der nahe an der Kugel (110) anhaftet.

3. Kugelkopf nach Anspruch 1 oder 2, wobei ein Luftableitungsloch (13) durch die Kugelführung (10) ausgebildet ist.

4. Kugelkopf nach Anspruch 1, wobei ein Schieber (35) mit der Führungsstange (31) gekoppelt und in einem Aufnahmeteil (36) eines mittleren Rahmens (30) aufgenommen ist und die Welle (12) in dem Schieber (35) aufgenommen ist, so dass der Winkel in Richtungen nach vorn und hinten durch Drücken oder Ziehen der Führungsstange (31) des Schiebers (35) eingestellt wird.

5. Kugelkopf nach Anspruch 4, wobei zwei mittlere Rahmen (30, 30a) vorgesehen sind, um jeweils den Schieber (35) und einen zweiten Schieber (35a) aufzunehmen, so dass die Winkeleinstellung in Richtung nach vorn, hinten, links und rechts erreicht wird.

6. Kugelkopf nach Anspruch 1, der weiterhin einen Führungsring (20) aufweist, der direkt unter der Kugelführung (10) vorgesehen ist und eine gekrümmte Oberfläche (21) hat, die entlang einer lateralen Seite des Führungsrings (20) ausgebildet ist.

7. Kugelkopf nach Anspruch 6, wobei ein mittlerer Rahmen (30) an einem unteren Ende des Führungsrings (20) vorgesehen ist und die Führungsstange (31) in den mittleren Rahmen (30) eintritt oder aus diesem austritt.

## Revendications

1. Tête boule pour une caméra à trépied permettant un ajustement fin des angles de réglage vers l'avant et l'arrière, tête boule comprenant :
i) une boule (110), et
ii) un élément de fixation (130) pour déplacer ou fixer la boule par pression,
**caractérisée en ce qu'**elle comprend en outre
iii) un dispositif de guidage de boule (10) prévu sous la boule de façon qu'il y adhère étroitement,
iv) un arbre (12) s'étendant directement vers le bas depuis le dispositif de guidage de boule, et
v) une tige de guidage (31),
vi) dans laquelle, dans un état où l'angle de la boule a été principalement ajusté, l'angle de la boule fixée au dispositif de guidage de boule peut être ajusté secondairement en poussant ou en tirant l'arbre à l'aide de la tige de guidage, même à tête boule fixée.

2. Tête boule suivant la revendication 1, dans laquelle une bague de frottement (11) est prévue sur une partie du dispositif de guidage de boule (10) qui adhère étroitement à la boule (110).

3. Tête boule suivant la revendication 1 ou 2, dans laquelle un trou d'évacuation d'air (13) est formé à travers le dispositif de guidage de boule (10).

4. Tête boule suivant la revendication 1, dans laquelle un coulisseau (35) est relié à la tige de guidage (31) et reçu dans une partie de réception (36) d'un châssis intermédiaire (30) et l'arbre (12) est reçu dans le coulisseau (35) de façon que l'angle de réglage est ajusté dans les directions avant et arrière en poussant ou en tirant la tige de guidage (31) du coulisseau (35).

5. Tête boule suivant la revendication 1, dans laquelle sont prévus deux châssis intermédiaires (30, 30a) qui reçoivent le coulisseau (35) et respectivement un second coulisseau (35a) de façon que l'ajustement de l'angle de réglage est obtenu dans les directions avant, arrière, gauche et droite.

6. Tête boule suivant la revendication 1 comprenant, en outre, un anneau de guidage (20) prévu directement sous le dispositif de guidage de boule (10) et présentant une surface courbée (21) formée le long d'une face latérale de l'anneau de guidage (20).

7. Tête boule suivant la revendication 6, dans laquelle un châssis intermédiaire (30) est prévu à une extrémité inférieure de l'anneau de guidage (20) et la tige de guidage (31) pénètre dans le châssis intermédiaire (30) ou quitte celui-ci.
